# EUROPÄISCHE PATENTSCHRIFT

(11) **EP 4 260 094 B1**
(45) Veröffentlichungstag und Bekanntmachung des Hinweises auf die Patenterteilung: **29.01.2025**
(21) Anmeldenummer: 21819120.3
(22) Anmeldetag: 29.11.2021
(51) Int. Cl.: G01S 13/931, G01S 7/521, G01S 15/931, G10K 9/22, G10K 11/00

(54) **ULTRASCHALLSENSOR FÜR EIN KRAFTFAHRZEUG UND KRAFTFAHRZEUG**
ULTRASONIC SENSOR FOR A MOTOR VEHICLE, AND MOTOR VEHICLE
CAPTEUR D'ULTRASONS POUR VÉHICULE AUTOMOBILE, ET VÉHICULE AUTOMOBILE

(30) Priorität: 08.12.2020 DE 102020132631
(43) Veröffentlichungstag der Anmeldung: 18.10.2023
(73) Patentinhaber: Valeo Schalter und Sensoren GmbH, 74321 Bietigheim-Bissingen (DE)
(72) Erfinder: HAAG, Fabian, 74321 Bietigheim-Bissingen (DE); WEHLING, Hans Wilhelm, 74321 Bietigheim-Bissingen (DE)
(74) Vertreter: Enge, Sebastian
(86) Internationale Anmeldenummer: PCT/EP2021/083285
(87) Internationale Veröffentlichungsnummer: WO 2022/122435

(56) Entgegenhaltungen:
- EP-B1- 2 805 321
- DE-A1- 102016 221 535
- KTI GMBH: "Sensoren für FAS", 30 August 2018 (2018-08-30), XP055887732, Retrieved from the Internet <URL:https://www.k-t-i.de/fileadmin/user_upload/pdfs/publikationen/ti/2018/2018-08_TI_Sensoren_fu%CC%88r_FAS_V1.0.pdf> [retrieved on 20220204]

## Beschreibung

Die vorliegende Erfindung betrifft das Gebiet der Ultraschallsensorik für Kraftfahrzeuge und spezieller einen Ultraschallsensor für ein Kraftfahrzeug und ein Kraftfahrzeug.

Bekannt sind, etwa aus der DE 10 202 200 639 A1, Ultraschallsensoren mit einem Gehäuse und einer in einer Gehäuseöffnung des Kunststoffgehäuses angeordneten Ultraschallmembran. Ein derartiger Ultraschallsensor kann zur Messung einer Distanz zu einem Objekt im Kraftfahrzeugumfeld oder zu einem Objekt im Innenraum des Fahrzeugs nach dem Puls-Echo-Verfahren verwendet werden. Dabei sendet die Ultraschallmembran, angeregt von einem daran angebrachten Schallwandlerelement, Energie in Form eines Ultraschallsignals aus. Sodann erfasst das Schallwandlerelement Schwingungen der Ultraschallmembran, die von einem aus dem Kraftfahrzeugumfeld oder dem Innenraum zurücklaufenden Echosignal herrühren. Anhand der Signallaufzeit wird die Distanz zu dem Objekt bestimmt. Derartige Messungen werden etwa von einem Parkassistenzsystem des Kraftfahrzeugs verwendet.

Nach dem Aussenden des Ultraschallsignals müssen zunächst beim Aussenden des Ultraschallsignals angeregte Strukturschwingungen des Ultraschallsensors abklingen. Während der Abklingzeit ist der Ultraschallsensor blind und kann kein Echosignal detektieren.

Wünschenswert ist daher, die Strukturdynamik eines Ultraschallsensors zu verbessern. Insbesondere sollen Transferpfade zu Strukturelementen, die in der Lage sind, Energie effizient zu speichern, wie etwa dem Kunststoffgehäuse und insbesondere den darin angeordneten metallischen Kontaktelementen, möglichst eliminiert werden. Dies wird herkömmlich beispielsweise dadurch erreicht, dass zwischen der Ultraschallmembran und dem Kunststoffgehäuse ein Entkopplungselement, wie beispielsweise ein Silikonring, angeordnet wird.

In der DE 19 212 299 639 A1 sind in einem Kontaktbereich zwischen dem Entkopplungsring und dem Ultraschallmembrantopf bzw. dem Kunststoffgehäuse jeweils an dem Entkopplungsring Rippen zum Herabsetzen der Steifigkeit des Entkopplungsrings angeordnet.

Auch die DE 10 2013 022 048 A1 lehrt einen solchen Ultraschallsensor mit einem durch Rippen strukturierten Entkopplungsring.

Die DE 10 2106 2321 535 A1 lehrt einen Ultraschallwandler mit einem Gehäuse und einem Membrantopf. Der Membrantopf ist in einem Aufnahmebereich des Gehäuses aufgenommen. Der Aufnahmebereich weist an einer senkrecht zur Längsachse angeordneten, radial umlaufenden axialen Anschlagfläche mehrere Erhebungen auf, die ebenfalls radial umlaufend angeordnet sind und deren Funktion nicht offenbart ist. Der Aufnahmebereich umfasst den Membrantopf unter bündiger Zwischenlage eines elastischen Entkopplungsrings.

Die US 2016/0008796 A1 lehrt, dass bei einem Ultraschallwandler ein vorzugsweise elastisches Fixierelement einen als "Case" bezeichneten Membrantopf an das Gehäuse koppelt. Das elastische Fixierelement weist umlaufende Rippen an einem Außenumfang auf, die in Vertiefungen in einem Kunststoffelement eingreifen, welche entsprechend zu den Rippen ausgebildet sind.

Vor diesem Hintergrund liegt der vorliegenden Erfindung als Aufgabe zugrunde, einen Ultraschallsensor mit verbesserter Strukturdynamik bereitzustellen.

Gemäß einem ersten Aspekt wird ein Ultraschallsensor für ein Kraftfahrzeug gemäß Anspruch 1 vorgeschlagen.

Insbesondere liegt das Entkopplungselement in einem Bereich, in dem die Rippen ausgebildet sind, nicht vollflächig an der Innenoberfläche des Kunststoffgehäuses an.

Insbesondere liegt das Entkopplungsbereich zwischen je zwei benachbarten Rippen nicht oder nicht vollflächig an der Innenoberfläche des Kunststoffgehäuses an.

Besonders bevorzugt liegt das Entkopplungselement in dem Bereich, in dem die Rippen ausgebildet sind, nur an Spitzen der Rippen an.

Demgemäß ist vorteilhafterweise ein Anteil der Innenoberfläche des Kunststoffgehäuses, der mit dem Entkopplungselement in Kontakt steht (im Weiteren auch als "Traganteil" der Innenoberfläche bezeichnet) reduziert gegenüber Vergleichsbeispielen, bei denen keine Rippen an der Innenoberfläche des Kunststoffgehäuses vorgesehen sind und/oder trotz an der Innenoberfläche des Kunststoffgehäuses vorgesehener Rippen das Entkopplungselement auch zwischen den Rippen an der Innenoberfläche des Kunststoffgehäuses anliegt, beispielsweise weil es in die Zwischenräume zwischen den Rippen gepresst ist und/oder eine zu den Rippen komplementäre Form aufweist.

Das Entkopplungselement ist insbesondere aus einem weichen Material ausgebildet, das mindestens weicher als das Kunststoffgehäuse und weicher als ein Material der Membranbaugruppe ist. Die Membrangruppe ist beispielsweise aus Aluminium ausgebildet. Das Entkopplungselement kann beispielsweise aus Silikon ausgebildet sein. Kunststoff und Aluminium können demgemäß auch als "harte" Materialien bezeichnet werden.

Die vorgeschlagene Reduktion des Traganteils kann aufgrund der Strukturschwingungen der Membranbaugruppe abwechselnd eine erhöhte Stauchung des weichen Entkopplungselements und eine erhöhte Entspannung der, vorzugsweise vorgespannten, Verbindung zwischen weichem Entkopplungselement und hartem Kunststoffgehäuse bewirken. Dadurch reduziert sich die Energieübertragung von der Ultraschallmembran über das Entkopplungselement auf das Kunststoffgehäuse. Somit kann vorteilhafterweise an einer Grenzfläche zwischen dem Entkopplungselement und dem Kunststoffgehäuse eine akustische Entkopplung bereitgestellt werden.

Die Rippen sind an der Innenoberfläche des harten Kunststoffgehäuses und nicht an dem weichen Entkopplungselement ausgebildet. Somit sind die Rippen an dem härteren bzw. festeren Bauteil ausgebildet. Demgemäß wird auch bei einer Montage mit Vorspannung das Entkopplungselement kaum verformt und der Traganteil ist auch nach der Montage weiterhin reduziert.

Die Innenoberfläche des Kunststoffgehäuses ist insbesondere eine Fläche, die eine Randfläche der Gehäuseöffnung definiert.

Das Entkopplungselement ist insbesondere dergestalt zwischen der Innenoberfläche des Kunststoffgehäuses und der Membranbaugruppe angeordnet, dass die Membranbaugruppe und das Kunststoffgehäuse einander nirgends unmittelbar berühren. Anders ausgedrückt ist das Entkopplungselement insbesondere in einem gesamten Bereich angeordnet, in dem die Membranbaugruppe und die Innenoberfläche des Kunststoffgehäuses einander überlappen.

Silikon als Material für das Entkopplungselement ist weiterhin dahingehend vorteilhaft, dass sich sein Verhalten über den für den Kraftfahrzeugsektor typischen Bereich von Betriebstemperaturen kaum ändert.

Die Membranbaugruppe kann neben der Ultraschallmembran weitere Komponenten des Ultraschallsensors erfassen, denen erlaubt wird, gemeinsam mit der Membran zu schwingen, weil dies entweder technisch erforderlich ist oder diese Komponente ein geringes oder vernachlässigbares Eigengewicht aufweisen. Alle übrigen Komponenten des Ultraschallsensors sind demgegenüber insbesondere in dem Kunststoffgehäuse angeordnet und somit von der Membranbaugruppe akustisch entkoppelt.

Insbesondere kann die Membranbaugruppe ein Schallwandlerelement, wie ein Piezoelement oder dergleichen, zur Schwingungsanregung und Schwingungserfassung der Ultraschallmembran umfassen. Das Schallwandlerelement kann auf einer Innenseite an die Ultraschallmembran geklebt oder anderweitig daran fixiert sein. Die Membranbaugruppe kann ferner eine mantelförmige Seitenwand umfassen, an welcher das Entkopplungselement anliegen kann. In diesem Fall kann mindestens ein Abschnitt der Mantelwand in der Gehäuseöffnung des Kunststoffgehäuses angeordnet sein, wobei zwischen Gehäuseöffnung und dem Abschnitt der Mantelwand das Entkopplungselement angeordnet ist, und ein anderer Abschnitt der Mantelwand sowie die Ultraschallmembran können aus dem Kunststoffgehäuse hervorstehen.

Unter "in einer Gehäuseöffnung des Kunststoffgehäuses angeordnet" kann mithin verstanden werden, dass mindestens ein Abschnitt der Membranbaugruppe innerhalb der Gehäuseöffnung des Kunststoffgehäuses angeordnet ist.

Gemäß einer Ausführungsform liegt das Entkopplungselement flächig an der Membranbaugruppe an.

Insbesondere liegt das Entkopplungselement vollflächig und/oder bündig an der Membranbaugruppe an. Anders ausgedrückt sind an der Membranbaugruppe keine Rippen ausgebildet und ein Anteil einer Außenfläche der Membranbaugruppe, der mit dem Entkopplungselement der Membranbaugruppe in Kontakt ist, ist nicht reduziert.

Demgemäß ergibt sich zusätzlich zu der akustischen Entkopplung ein Dämpfungseffekt, da bei vollflächiger bzw. bündiger Ausgestaltung der Grenzfläche zwischen Entkopplungselement und Membranbaugruppe ohne Rippen Schwingungsenergie der Membranbaugruppe im Entkopplungselement durch innere Reibung dissipiert werden kann. Außerdem vereinfacht sich die Fixierung der Membranbaugruppe im daran angebrachtem Entkopplungselement im Kunststoffgehäuse.

Gemäß einer weiteren Ausführungsform ist die Membranbaugruppe unter Vorspannung in der Gehäuseöffnung montiert.

Insbesondere können die Membranbaugruppe und das Entkopplungselement gemeinsam unter Vorspannung in der Gehäuseöffnung montiert sein.

Demgemäß sind vorteilhaft keine Fixierungsmittel zum Fixieren der Membranbaugruppe an dem Kunststoffgehäuse erforderlich, die ein "Leck" für Schwingungsenergie darstellen könnten.

Die Membranbaugruppe umfasst einen Membrantopf mit einem Boden, welcher die Ultraschallmembran ausbildet, und einem einstückig mit dem Boden ausgebildeten Mantel, wobei der Membrantopf entlang einer axialen Richtung der Gehäuseöffnung in die Gehäuseöffnung eingeführt ist.

Der Membrantopf kann insbesondere ein einstückig ausgebildetes Tiefziehbauteil aus Aluminium sein. Unter einem "einstückigen" Ausbilden ist insbesondere Urformen in einem einzelnen Arbeitsgang zu verstehen.

Unter "in die Gehäuseöffnung eingeführt" ist insbesondere zu verstehen, dass mindestens ein Abschnitt des Membrantopfs (im Speziellen ein Abschnitt des Mantels) in die Gehäuseöffnung eingeführt ist. Der Membrantopf ist insbesondere teilweise in die Gehäuseöffnung eingeführt und steht teilweise aus der Gehäuseöffnung hervor, wobei der Boden des Membrantopfs axial nach außen weist und nicht in die Gehäuseöffnung eingeführt ist.

Herbei kann insbesondere die axiale Richtung der Gehäuseöffnung mit einer axialen Richtung des Membrantopfes zusammenfallen. Ferner kann in einem Abschnitt, in dem der Mantel des Membrantopfes in die Gehäuseöffnung eingeführt ist, ein Außenumfang Mantels des Membrantopfes mit einem Umfang der Gehäuseöffnung übereinstimmen bzw. im Wesentlichen dergestalt übereinstimmen, dass ein Spalt verbleibt, in dem das Entkopplungselement zwischen dem Außenumfang des Mantels und der Innenoberfläche des Kunststoffgehäuses in der Gehäuseöffnung angeordnet ist.

Der Mantel des Membrantopfes, die Gehäuseöffnung, in die der Membrantopf eingeführt ist, und der Boden des Membrantopfes, der außerhalb des Kunststoffgehäuses angeordnet ist, können im Querschnitt beispielsweise jeweils im Wesentlichen rund, oval oder elliptisch sein. Mit einem nicht vollständig runden Querschnitt kann sich eine für die Umfeldvermessung vorteilhafte Anisotropie der Abstrahlcharakteristik der Ultraschallmembran ergeben.

Der Mantel des Membrantopfes schützt in dem Abschnitt, in dem er nicht in die Gehäuseöffnung eingeführt ist, den Ultraschallsensor vor dem Eindringen von Wasser und Fremdkörpern. In dem Abschnitt, in dem der Mantel in die Gehäuseöffnung eingeführt ist, kann durch das insbesondere vollflächig an dem Mantel anliegende Entkopplungselement ein bündiger und dichter Abschluss erzielt werden.

Es stehen mindestens einige der Rippen an einem Mantelabschnitt der Innenoberfläche des Kunststoffgehäuses radial nach innen vor und verlaufen in der axialen Richtung der Gehäuseöffnung.

Demgemäß können radiale Strukturschwingungen des Membrantopfes vorteilhaft akustisch von dem Kunststoffgehäuse entkoppelt werden. Dadurch, dass die Rippen an dem Mantelabschnitt der Innenoberfläche in radialer Richtung verlaufen, ist zudem ein Einführen des Membrantopfs und des Entkopplungselements in die Gehäuseöffnung des Kunststoffgehäuses entlang der Innenoberfläche des Kunststoffgehäuses zum Montagezeitpunkt vereinfacht. Dies gilt insbesondere, wenn die Montage des Membrantopfs in der Gehäuseöffnung unter einer definierten Vorspannung erfolgt.

Es sei angemerkt, dass die Gehäuseöffnung im Wesentlichen zylinderförmig sein kann und der Mantelabschnitt der Innenoberfläche des Kunststoffgehäuses demgemäß eine mantelförmige Randfläche der Gehäuseöffnung definieren kann.

Gemäß einer weiteren Ausführungsform bilden die in der axialen Richtung verlaufenden Rippen eine Einführschräge zum Einführen des Membrantopfes und des Entkopplungselements aus.

Das heißt, ein Betrag, um den die axial verlaufenden Rippen radial in die Gehäuseöffnung vorstehen, kann entlang des axialen Verlaufs dieser Rippen von außen nach innen allmählich zunehmen. Anders ausgedrückt können die Rippen an einer axial außenliegenden Position einen größeren freien Durchmesser der Gehäuseöffnung definieren als an einer axial innenliegenden Position.

Demgemäß ist zum Montagezeitpunkt das Einführen des Membrantopfs und des Entkopplungselements vereinfacht. Insbesondere kann eine Vorspannung der Montage in dem Maße, in dem der Membrantopf und das Entkopplungselement in die Gehäuseöffnung eingeführt werden, allmählich ansteigen.

Gemäß einer weiteren Ausführungsform ist mindestens ein Abschnitt des Entkopplungselements in einem gesamten ersten Überlappungsbereich angeordnet, in dem eine Außenoberfläche des Mantels des Membrantopfes und der Mantelabschnitt der Innenoberfläche des Kunststoffgehäuses einander überlappen, liegt flächig an dem Mantel des Membrantopfes an und umschließt den Mantel des Membrantopfes ringförmig, wobei die in der axialen Richtung verlaufenden Rippen in dem Mantelabschnitt der Innenoberfläche des Kunststoffgehäuses in dem ersten Überlappungsbereich ausgebildet sind.

Demgemäß kann in dem gesamten ersten Überlappungsbereich, in dem der Membrantopf (die Außenfläche des Mantels) und der Mantelabschnitt der Innenoberfläche des Kunststoffgehäuses einander radial überlappen, das Entkopplungselement dazwischen angeordnet sein. Hierbei wird die vorgeschlagene akustischen Entkopplung dadurch bereitgestellt, dass in dem ersten Überlappungsbereich die axial verlaufenden Rippen bereitgestellt sind und ein Traganteil des Mantelabschnitts der Innenoberfläche des Kunststoffgehäuses reduziert ist. Zusätzlich kann durch das flächige, insbesondere vollflächige Anliegen des Entkopplungselements an dem Mantel des Membrantopfs das Entkopplungselement dämpfend wirken.

Gemäß einer weiteren Ausführungsform stehen mindestens einige der Rippen an einem Bodenabschnitt der Gehäuseöffnung in der axialen Richtung der Gehäuseöffnung vor und verlaufen ringförmig in einer Umfangsrichtung der Gehäuseöffnung.

Demgemäß können axiale Strukturschwingungen des Membrantopfes vorteilhaft akustisch von dem Kunststoffgehäuse entkoppelt werden. Dadurch, dass die Rippen ringförmig in der Umfangsrichtung der Gehäuserichtung, also insbesondere um einen gesamten Umfang der Gehäuseöffnung herum, verlaufen, kann eine Dichtungswirkung erzielt werden.

Es sei angemerkt, dass die Innenoberfläche des Kunststoffgehäuses neben dem Mantelabschnitt auch einen Bodenabschnitt aufweisen kann, der mindestens Abschnitte einer Randfläche an dem Bodenabschnitt der Gehäuseöffnung definiert. Demgemäß handelt es sich auch bei den in der axialen Richtung vorstehenden Rippen um an der Innenoberfläche des Kunststoffgehäuses ausgebildete Rippen.

Gemäß einer weiteren Ausführungsform ist der Bodenabschnitt der Gehäuseöffnung durch eine einstückig mit dem Kunststoffgehäuse ausgebildete, in der axialen Richtung innenliegende und radial nach innen auskragende, ringförmige Konsole ausgebildet.

Die Konsole kann einen Anschlag für den Mantel des Membrantopfes bilden. Somit kann die Anordnungsposition der Konsole definieren, wie weit der Membrantopf bei der Montage des Ultraschallsensors in die Gehäuseöffnung eingeführt werden kann. Dadurch, dass die Konsole ringförmig, also insbesondere in einem mittigen Bereich offen ist, ist es dennoch möglich, mit einem Entkopplungsdraht oder dergleichen durch die mittige Öffnung der Konsole hindurch die Ultraschallmembran des Membrantopfes mit auf der anderen Seite der Konsole im Inneren des Kunststoffgehäuses angeordneten elektronischen Bauelementen zu kontaktieren.

Gemäß einer weiteren Ausführungsform ist mindestens ein Abschnitt des Entkopplungselements in einem gesamten zweiten Überlappungsbereich angeordnet, in dem eine Stirnseite des Mantels des Membrantopfs und der Bodenabschnitt der Gehäuseöffnung einander überlappen, und liegt an der Stirnseite des Mantels des Membrantopfs flächig an, wobei die ringförmig in der radialen Richtung verlaufenden Rippen an dem Bodenabschnitt der Gehäuseöffnung in dem zweiten Überlappungsbereich ausgebildet sind.

Demgemäß kann in dem gesamten zweiten Überlappungsbereich, in dem der Membrantopf (die Stirnseite des Mantels) und der Bodenabschnitt der Gehäuseöffnung (die Oberfläche der ringförmigen Konsole) einander axial überlappen, das Entkopplungselement dazwischen angeordnet sein. Hierbei wird die vorgeschlagene akustische Entkopplung dadurch bereitgestellt, dass in dem zweiten Überlappungsbereich die ringförmigen bzw. umlaufend verlaufenden Rippen bereitgestellt sind und ein Traganteil des Bodenabschnitts (der Konsolenoberfläche) reduziert ist. Zusätzlich kann durch das flächige, insbesondere vollflächige, Anliegen des Entkopplungselements an der Stirnseite des Mantels des Membrantopfs das Entkopplungselement dämpfend wirken.

Insbesondere kann der Mantel des Membrantopfs an seiner der Konsole zugewandten Stirnseite aufgeweitet, beispielsweise flanschartig nach außen verbreitert, sein, um den axialen Überlappungsbereich zu vergrößern und die Dämpfung axialer Schwingungen weiter zu verbessern.

Gemäß einer weiteren Ausführungsform ist ein ringförmiger Deckel von außen auf den Membrantopf und das Kunststoffgehäuse aufgesetzt, bedeckt freiliegende Abschnitte des Entkopplungselements und ist von außen mit dem Kunststoffgehäuse verbunden, wobei der ringförmige Deckel ein Zweikomponentenmaterial mit einer harten und einer weichen Materialkomponente ist und die weiche Materialkomponente an der Außenoberfläche des Mantels des Membrantopfs, an den freiliegenden Abschnitten des Entkopplungselements und an einem stirnseitigen Rand des Kunststoffgehäuses anliegt.

Die weiche Materialkomponente ist mindestens weicher als die harte Materialkomponente. Die weiche Materialkomponente kann insbesondere aus dem Material ausgebildet sein, aus dem auch das Entkopplungselement ausgebildet ist, also beispielsweise aus Silikon. Die harte Materialkomponente kann insbesondere aus dem Material ausgebildet sein, aus dem das Kunststoffgehäuse ausgebildet ist, also beispielsweise aus Kunststoff.

Der Deckel (insbesondere die harte Materialkomponente des Deckels) kann beispielsweise von außen mit dem Kunststoffgehäuse durch Laserschweißen verbunden sein.

Der Deckel kann als Befestigungselement zum Fixieren des Membrantopfes an dem Gehäuse dienen. Dabei wird der Membrantopf vorteilhafterweise derart an dem Gehäuse fixiert, dass an keiner Stelle ein direkter Kontakt zwischen dem Membrantopf und dem Kunststoffgehäuse besteht. Auch besteht vorzugsweise an keiner Stelle Kontakt zwischen dem Membrantopf und der harten Materialkomponente des Deckels. Der Deckel kann lediglich mit der weichen Materialkomponente an dem Membrantopf anliegen. Somit kann einer Energieübertragung von dem Membrantopf über den Deckel auf das Kunststoffgehäuse entgegengewirkt werden.

Gemäß einem zweiten Aspekt wird ein Kraftfahrzeug mit mindestens einem Ultraschallsensor wie vorstehend beschrieben vorgeschlagen.

Die für den Ultraschallsensor des ersten Aspekts beschriebenen Merkmale, Vorteile und Ausführungsformen gelten entsprechend auch für das Kraftfahrzeug des zweiten Aspekts.

Das Kraftfahrzeug kann insbesondere ein Personenkraftfahrzeug oder ein Lastkraftfahrzeug sein. Das Kraftfahrzeug kann über ein Assistenzsystem, wie beispielsweise ein Fahrassistenzsystem oder ein Parkassistenzsystem, verfügen, das insbesondere zum teilautonomen oder vollautonomen Fahren des Fahrzeugs eingerichtet sein kann. Unter teilautonomem Fahren wird beispielsweise verstanden, dass das Assistenzsystem eine Lenkvorrichtung und/oder eine Fahrstufenautomatik steuert. Unter vollautonomem Fahren wird beispielsweise verstanden, dass das Assistenzsystem zusätzlich auch eine Antriebseinrichtung und eine Bremseinrichtung steuert. Das Assistenzsystem kann hardwaretechnisch und/oder softwaretechnisch implementiert sein. Bei einer hardwaretechnischen Implementierung kann das Assistenzsystem zum Beispiel als Computer oder als Mikroprozessor ausgebildet sein. Bei einer softwaretechnischen Implementierung kann das Assistenzsystem als Computerprogrammprodukt, als eine Funktion, als eine Routine, als Teil eines Programmcodes oder als ausführbares Objekt ausgebildet sein. Insbesondere kann das Assistenzsystem als Teil eines übergeordneten Steuerungssystems des Fahrzeugs, wie beispielsweise eine ECU (Engine Control Unit), ausgebildet sein. Das Assistenzsystem kann den vorgeschlagenen Ultraschallsensor zum Überwachen bzw. Vermessen eines Umfelds des Kraftfahrzeugs mittels Ultraschallmessungen nach dem Puls-Echo-Verfahren verwenden.

Es versteht sich, dass Verbesserungen und Modifikationen an der oben und unten im Detail beschriebenen vorliegenden Erfindung vorgenommen werden können, ohne vom Umfang der Erfindung abzuweichen, welche in den beigefügten Ansprüchen offenbart ist.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt eine schematische vertikale Schnittansicht eines Ultraschallsensors gemäß einem ersten Ausführungsbeispiel;
- Fig. 2: zeigt eine vereinfachte Ansicht eines Ultraschallsensors gemäß einem zweiten Ausführungsbeispiel;
- Fig. 3: zeigt einen horizontalen Schnitt A-A der Ansichten in Fig. 2, 4, 5 und 6;
- Fig. 4: zeigt einen vertikalen Schnitt B-B der Ansicht aus Fig. 3;
- Fig. 5: zeigt einen vertikalen Schnitt C-C der Ansicht aus Fig. 3;
- Fig. 6: zeigt einen vertikalen Schnitt D-D der Ansicht aus Fig. 3; und
- Fig. 7: zeigt ein Kraftfahrzeug gemäß einem dritten Ausführungsbeispiel.

In den Figuren sind gleiche oder funktionsgleiche Elemente mit denselben Bezugszeichen versehen worden, sofern nichts anderes angegeben ist.

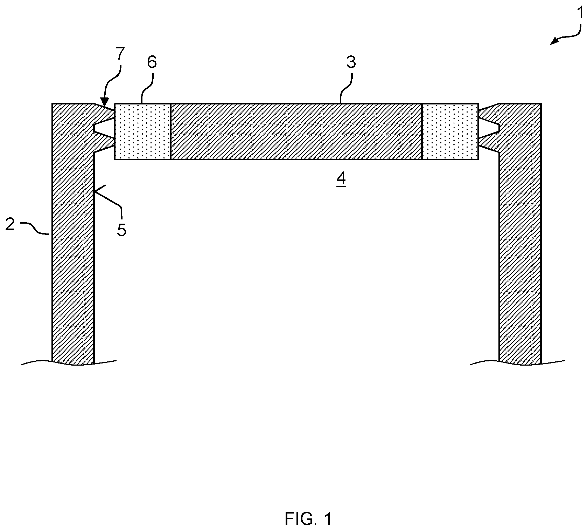

Fig. 1 zeigt eine schematische Schnittansicht eines Ultraschallsensors 1 gemäß einem ersten Ausführungsbeispiel. Der Ultraschallsensor weist ein Kunststoffgehäuse 2 und eine Membranbaugruppe 3 auf. Die Membranbaugruppe ist in einer Gehäuseöffnung 4 des Kunststoffgehäuses 2 angeordnet und umfasst insbesondere eine Ultraschallmembran (nicht explizit gezeigt). Zwischen einer Innenoberfläche 5 des Kunststoffgehäuses 2, der einen Rand der Gehäuseöffnung 4 definiert, und der Membranbaugruppe 3 ist ein Entkopplungselement 6 angeordnet.

Das Entkopplungselement ist aus einem weichen Material, wie beispielsweise Silikon, hergestellt. Das Kunststoffgehäuse 2 ist demgegenüber aus einem harten Material hergestellt. Die Membranbaugruppe 3 ist beispielsweise aus einem ebenfalls harten Material wie Aluminium hergestellt.

An der Innenoberfläche 5 des Kunststoffgehäuses 2 sind mehrere Rippen 7 ausgebildet. Das Entkopplungselement 6 liegt an den Rippen 7 an. Demgemäß ist ein Traganteil der Innenoberfläche 5 des Kunststoffgehäuses (Anteil der Innenoberfläche 5, der mit dem Entkopplungselement 6 in Kontakt ist) deutlich geringer als 100 % und insbesondere reduziert gegenüber einem Fall, in dem die Rippen 7 nicht vorgesehen wären. D.h., es besteht ein nicht vollflächiger Kontakt zwischen dem Entkopplungselement 6 und der Innenoberfläche 5 des Kunststoffgehäuses 2.

Fig. 1 zeigt nur vorgeschlagene Aspekte des Ultraschallsensors 1. Selbstverständlich kann der Ultraschallsensor 1 darüber hinaus weitere nicht gezeigte Elemente aufweisen. So kann die Membrangruppe 3 weiterhin ein Schallwandlerelement wie ein Piezoelement oder dergleichen umfassen, das von innen an die Ultraschallmembran der Membranbaugruppe 3 geklebt sein kann und zur Schwingungsanregung und Schwingungserfassung der Ultraschallmembran der Membranbaugruppe 3 dient. Das nicht gezeigte Schallwandlerelement kann mit einem nicht gezeigten Entkopplungsdraht elektrisch kontaktiert sein. In dem Gehäuse 2 können weiterhin in einem in Fig. 1 nicht gezeigten Bereich eine Leiterplatte mit elektronischen Bauelementen zum Ansteuern des Schallwandlerelements und zur Kommunikation mit einer zu dem Ultraschallsensor 1 externen Steuereinheit vorgesehen sein.

Bei dem in Fig. 1 gezeigten Ultraschallsensor 1 ist der Traganteil Innenoberfläche 5 des Kunststoffgehäuses 2 reduziert, und die Rippen 7 sind auf der Seite des härteren der beiden Elemente (des Kunststoffgehäuses 2) ausgebildet. Demgemäß bleibt der vorteilhaft auch bei Montage der Membranbaugruppe 3 unter Vorspannung in der Gehäuseöffnung 4 reduziert. Somit kann vorteilhaft eine besonders gute akustische Entkopplung zwischen der Membranbaugruppe 3 und dem Kunststoffgehäuse 2 erzielt und die Montage vereinfacht werden.

Gemäß einer bevorzugten Weiterbildung des ersten Ausführungsbeispiels, die in Fig. 1 gezeigt ist, ist ein Flächenanteil einer Außenfläche der Membranbaugruppe, der mit dem Entkopplungselement 6 in Kontakt ist, nicht reduziert. Anders ausgedrückt liegt das Entkopplungselement 6 bündig bzw. vollflächig an der Membranbaugruppe 3 an. Demgemäß kann vorteilhafterweise Schwingungsenergie der Membranbaugruppe 3 im Entkopplungselement 6 durch innere Reibung dissipiert werden und dem Entkopplungselement 6 kommt auch eine Dämpfungsfunktion zu.

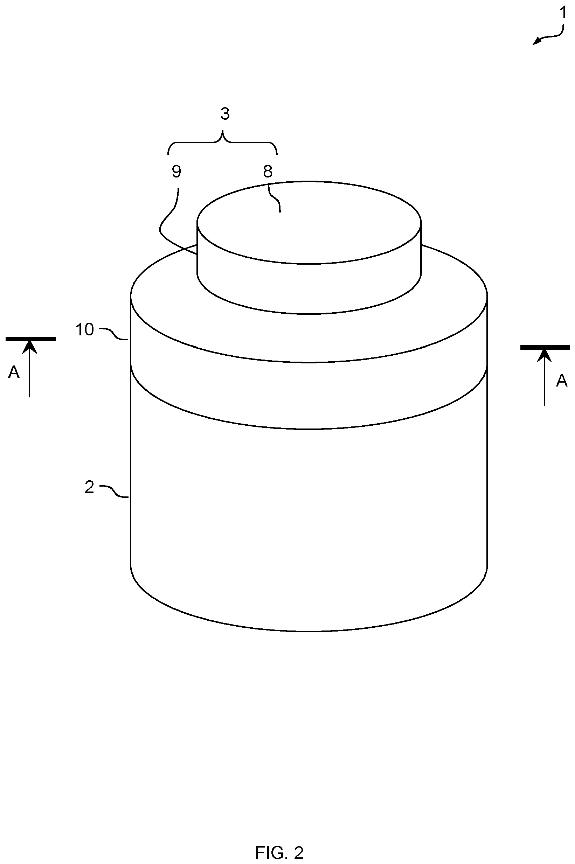

Fig. 2 zeigt eine vereinfachte Ansicht eines Ultraschallsensors 1 gemäß einem zweiten Ausführungsbeispiel. Im Folgenden werden hauptsächlich Unterschiede zwischen dem zweiten und dem ersten Ausführungsbeispiel beschrieben.

Der Ultraschallsensor 1 weist ein Kunststoffgehäuse 2 auf, in dem die vorstehend anhand des ersten Beispiels diskutierten nicht gezeigten elektronischen Bauelemente und dergleichen angeordnet sind. Die Membranbaugruppe des Ultraschallsensors 1 ist als Membrantopf 3 ausgebildet, der einen Boden 8 und einen Mantel 9 (mantelförmige Wand) aufweist und in seinem Inneren (in Fig. 2 nicht zu sehen) hohl ist. Der aus Boden 8 und Mantel 9 bestehende Membrantopf 3 ist als ein Tiefziehbauteil einstückig aus Aluminium ausgebildet. Der Boden 8 des Membrantopfs 3 bildet die Ultraschallmembran des Ultraschallsensors 1 aus und wird daher auch als die Ultraschallmembran 8 bezeichnet.

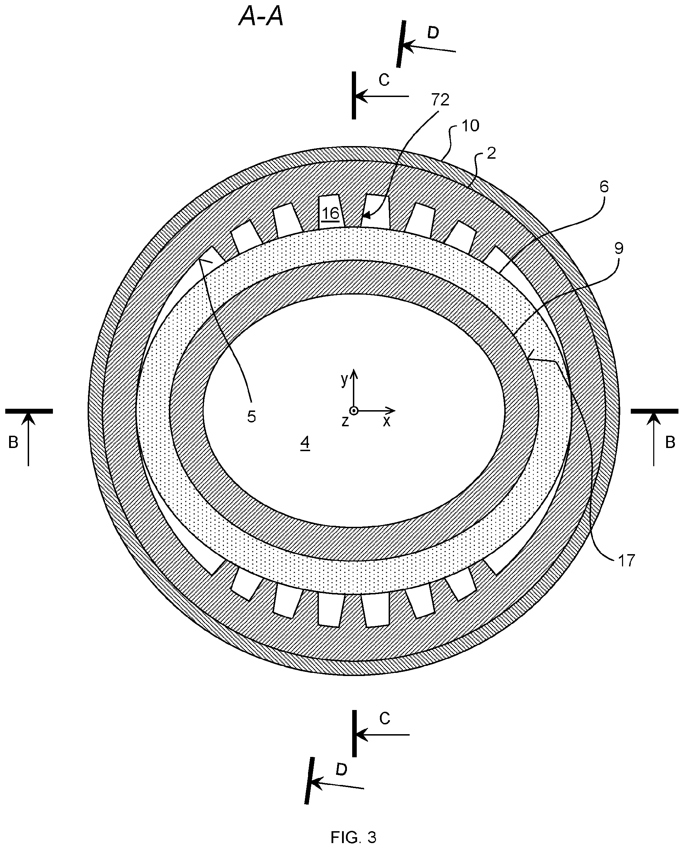

In Fig. 2 ist zu sehen, dass ein Abschnitt des Membrantopfes 3 aus dem Kunststoffgehäuse 2 hervorsteht. Ein ringförmiger Deckel 10 ist von außen auf den Membrantopf 3 und das Kunststoffgehäuse 2 aufgesetzt und von außen mit dem Kunststoffgehäuse 2 verbunden. Der in Fig. 2 nicht zu sehende Teil des Membrantopfes 3 (des Mantels 9) ist von innen in einer in Fig. 2 ebenfalls nicht zu sehenden Gehäuseöffnung (4 in Fig. 3, 4, 5) des Kunststoffgehäuses 2 angeordnet.

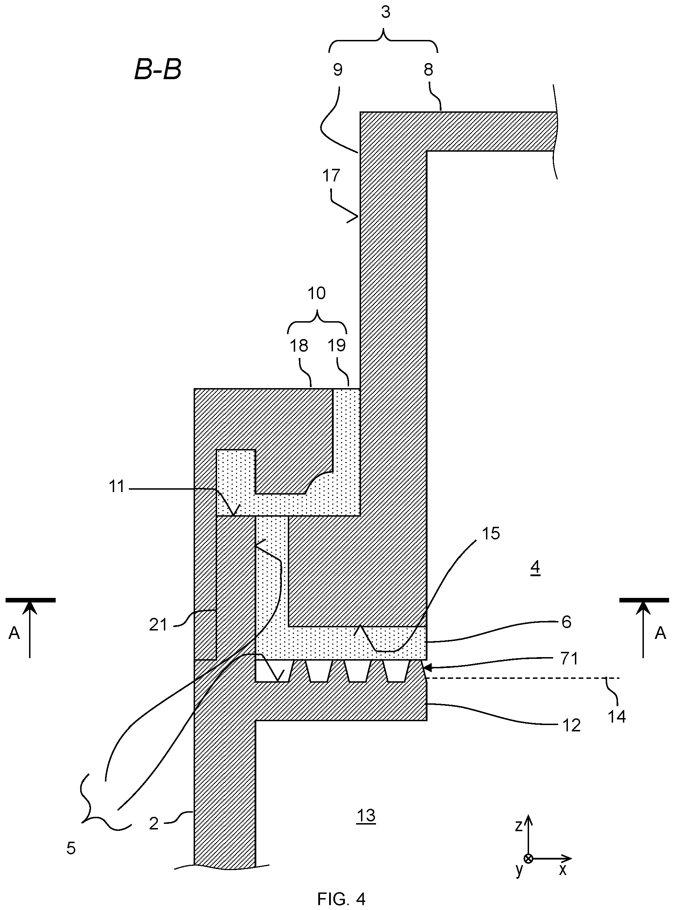

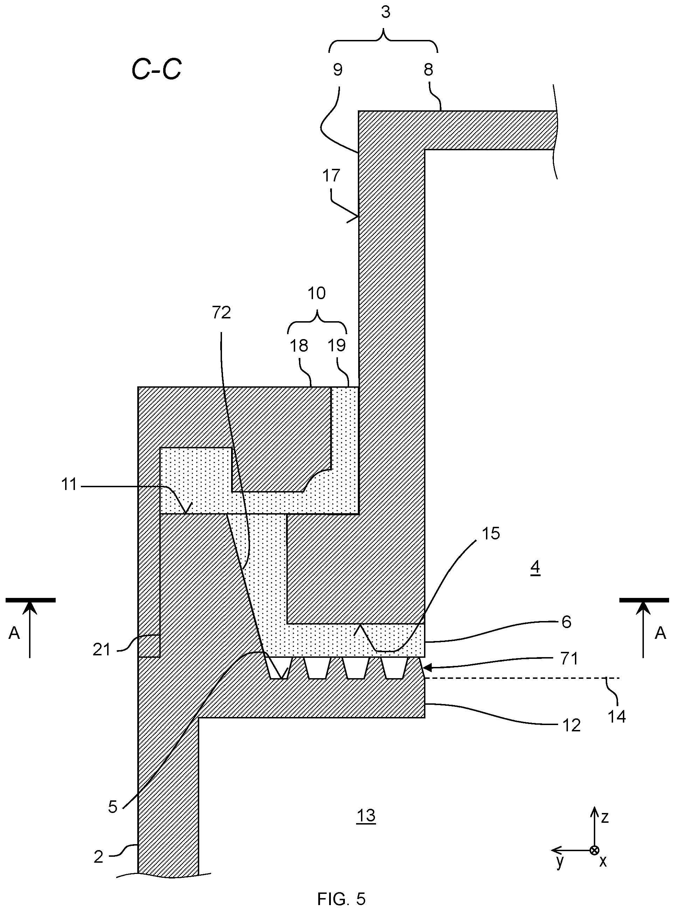

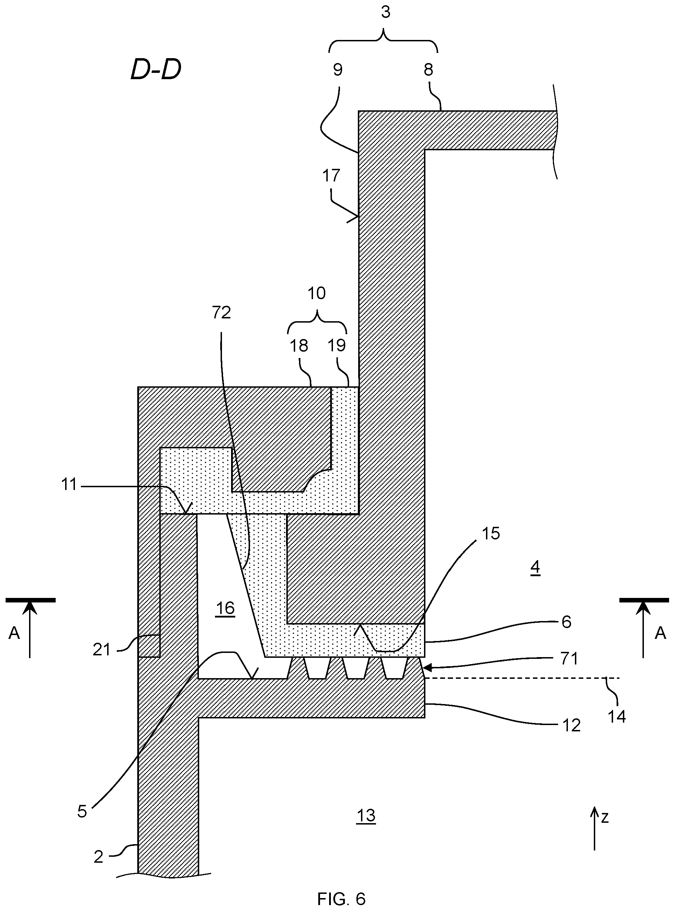

Ein innerer Aufbau eines Bereichs des Ultraschallsensors 1, in dem der Membrantopf 3 in die Gehäuseöffnung (4 in Fig. 3, 4, 5) eingeführt ist, wird nun anhand der Fig. 3-6 beschrieben. Fig. 3 zeigt einen horizontalen Schnitt A-A der Ansicht aus Fig. 2; Fig. 4 zeigt einen vertikalen Schnitt B-B der Ansicht aus Fig. 3: Fig. 5 zeigt einen vertikalen Schnitt C-C der Ansicht aus Fig. 3; und Fig. 6 zeigt einen vertikalen Schnitt D-D der Ansicht aus Fig. 3. Die Richtungen x und y in Fig. 3-5 beschreiben eine erste (x) und eine zweite (y) radiale Richtung. Im Speziellen weisen in Fig. 3 die mit x und y bezeichneten Pfeile radial nach außen. Die Richtung z in Fig. 3-5 bezeichnet eine axiale Richtung (axiale Richtung des Mantels 9 des Membrantopfes 3 (Fig. 2) sowie axiale Richtung der Gehäuseöffnung 4 des Kunststoffgehäuses 2). Im Speziellen weist der mit z bezeichnete Pfeil axial nach außen. Die axiale Richtung nach außen wird auch als Richtung nach "oben" bezeichnet und die axiale Richtung nach innen wird auch als Richtung nach "unten" bezeichnet. Die Begriffe "oben" und "unten", "oberhalb" und "unterhalb" beziehen sich dabei auf die Zeichnung und sollen die tatsächliche räumliche Orientierung des Ultraschallsensors 1 (Fig. 2) in keiner Weise einschränken.

Es wird auf Fig. 4-6 Bezug genommen. Das Kunststoffgehäuse 2 ist nach oben offen und umrandet eine im Wesentlichen zylinderförmige innere Gehäuseöffnung 4, die von einem Niveau eines oberen bzw. stirnseitigen Rands 11 des Kunststoffgehäuses 2 axial nach innen bzw. unten verläuft. Ein axial innenliegender Abschnitt des Mantels 9 des Membrantopfes 3 ist in der Gehäuseöffnung 4 angeordnet. Dabei ist zwischen dem Mantelabschnitt 9 und der Innenoberfläche 5 des Kunststoffgehäuses 2 ein Silikonring 6 (Beispiel für ein Entkopplungselement) angeordnet.

Eine in der Gehäuseöffnung 4 axial innenliegende, radial von einer Außenwand des Kunststoffgehäuses 2 nach innen auskragende, ringförmige Konsole 12 (Fig. 4-6) bildet einen Bodenabschnitt der Gehäuseöffnung 4 aus. Ein weiterer Bodenabschnitt 14 der Gehäuseöffnung 4 verläuft gedacht durch den offenen mittigen Bereich, der von der ringförmigen Konsole 10 umrandet wird. Die Konsole 12 ist einstückig mit dem Kunststoffgehäuse 2 ausgebildet. Die Innenoberfläche 5 des Kunststoffgehäuses umfasst somit auch eine Oberfläche der Konsole 12. In einem Gehäuseinnenraum 13 unterhalb der Konsole 12 sind sonstige Komponenten des Ultraschallsensors 12, wie (nicht gezeigte) elektronische Bauelemente zum Ansteuern eines (nicht gezeigten) Piezoelements, das an der Unterseite der Ultraschallmembran 8 angebracht ist, und dergleichen angeordnet. Anders ausgedrückt wird als "Gehäuseöffnung 4" eine speziell zur Aufnahme mindestens eines Abschnitts des Membrantopfes 3 vorgesehene Öffnung bzw. Aussparung des Kunststoffgehäuses 2 bezeichnet. Die Gehäuseöffnung 4 umfasst jedoch nicht notwendigerweise den gesamten Innenraum 13 des Ultraschallsensors 1.

Wie in Fig. 4-6 gezeigt ist, sind an der Oberseite der Konsole 12 - und mithin an einer Innenoberfläche 5 des Kunststoffgehäuses 2 - mehrere erste Rippen 71 angeordnet. Die ersten Rippen 71 stehen an der axialen Richtung der Gehäuseöffnung 4 nach außen bzw. oben vor und verlaufen ringförmig in einer Umfangsrichtung um den gesamten Umfang der Gehäuseöffnung 4 herum. Eine Stirnseite 15 des Mantels 9 des Membrantopfs 3 ist an ihrem axial innenliegenden bzw. unteren Ende flanschförmig erweitert. In einem Bereich, in dem die Stirnseite 15 des Mantels 9 des Membrantopfes 3 und die Oberseite der Konsole 12, die einen Bodenabschnitt der Gehäuseöffnung 4 definiert, einander überlappen, ist ein Abschnitt des Silikonrings 6 zwischen der Stirnseite 15 des Mantels und der Konsole 12 angeordnet. In demselben Überlappungsbereich sind auch die ersten Rippen 71 an der Innenoberfläche des Kunststoffgehäuses 5 im Bereich der Konsole 12 angeordnet. Der Silikonring 6 (ein horizontaler Abschnitt des Silikonrings 6) liegt in diesem Überlappungsbereich vollflächig an der Stirnseite 15 des Mantels 9 des Membrantopfes 3 an. Somit kann die Energie axialer Schwingungen des Membrantopfes 3 in den Silikonring 6 übertragen werden und dort durch innere Reibung dissipiert werden. Dagegen ist aufgrund der ersten Rippen 71, die an der Oberfläche der Konsole 12 in dem Überlappungsbereich angeordnet sind, ein Anteil der Innenoberfläche 5 des Kunststoffgehäuses, der mit dem Silikonring 6 in Kontakt ist, im Bereich der Konsole 12 reduziert gegenüber einem Fall, bei dem die ersten Rippen 71 nicht vorgesehen sind. Somit wird bei axialen Strukturschwingungen des Membrantopfes 3 der Silikonring 6 in dem Überlappungsbereich von Stirnseite 15 des Mantels 9 und Innenoberfläche 5 des Kunststoffgehäuses 2 an der Oberseite der Konsole 12 abwechselnd gestaucht und entspannt und es kann eine akustische Entkopplung bereitgestellt werden, d. h., die Energieübertragung von der Ultraschallmembran 3 auf die Konsole 12 und damit auf das Kunststoffgehäuse 2 kann reduziert werden.

Ein weiterer, vertikaler Abschnitt des Silikonrings 6 ist in einem Überlappungsbereich zwischen einer Außenoberfläche 17 des Mantels 9 des Membrantopfes 3 und einem Mantelabschnitt der Innenoberfläche 5 des Kunststoffgehäuses 2 im Bereich eines von dem Kunststoffgehäuse 2 ausgebildeten Mantels 21 der Gehäuseöffnung 4 angeordnet.

Es wird insbesondere auf den Schnitt A-A in Fig. 3 Bezug genommen. In dem Überlappungsbereich zwischen der Außenoberfläche 17 des Mantels 9 des Membrantopfes 3 und dem Mantelabschnitt der Innenoberfläche 5 des Kunststoffgehäuses 2 liegt der Silikonring 6 durchgängig vollflächig an der Außenoberfläche 17 des Mantels 9 des Membrantopfes 3 (Fig. 4) an. Somit kann die Energie radialer Schwingungen des Membrantopfes 3 in den Silikonring 6 übertragen werden und dort durch innere Reibung dissipiert werden. Dagegen sind an dem Mantelabschnitt der Innenoberfläche 5 des Kunststoffgehäuses 2 mehrere zweite Rippen 72 ausgebildet, die radial nach innen vorstehen. Der Kontakt zwischen dem Silikonring 6 und dem Kunststoffgehäuse 2 ist damit im Wesentlichen auf die Spitzen der Rippen 72 reduziert; zwischen den Rippen 72 sind freie Hohlräume 16 ausgebildet, in denen kein Kontakt zwischen Silikonring 6 und der Innenoberfläche 5 des Kunststoffgehäuses 2 besteht. Demgemäß wird bei radialen Strukturschwingungen des Membrantopfes 3 der Silikonring 6 in dem Überlappungsbereich der Außenoberfläche 17 des Mantels 9 und des Mantelabschnitts der Innenoberfläche 5 des Kunststoffgehäuses 2 abwechselnd gestaucht und entspannt, und es kann eine akustische Entkopplung bereitgestellt werden, d. h., die Energieübertragung von der Ultraschallmembran 3 auf das Kunststoffgehäuse 2 kann reduziert werden.

In dem Schnitt C-C, der in Fig. 5 gezeigt ist, ist zu erkennen, dass die dort gezeigte zweite Rippe 72 in axialer Richtung über den gesamten Überlappungsbereich von der Außenoberfläche (17 in Fig. 3) des Mantels 9 des Membrantopfes 3 mit dem Mantelabschnitt der Innenoberfläche 5 des Kunststoffgehäuses 2 im Bereich des Mantels 21 verläuft. Ferner ist in Fig. 5 zu erkennen, dass die axiale verlaufende Rippe 72 eine Einführschräge ausbildet. Die Einführschräge kann dazu dienen, das Einführen des Membrantopfs 3 mit daran angebrachtem Silikonring 6 in die Gehäuseöffnung 4 zu vereinfachen. Insbesondere wenn die Montage des Membrantopfes 3 unter einer definierten Vorspannung erfolgt, kann durch die Einführschräge außerdem die Sollposition des Membrantopfes 3 vorgegeben werden.

In dem Schnitt D-D, der in Fig. 6 gezeigt ist, ist beispielhaft ein Hohlraum 16 zwischen zwei der zweiten Rippen (72 in Fig. 3, 5) zu erkennen. Anders ausgedrückt besteht in Abschnitten zwischen zwei zweiten Rippen (72 in Fig. 3, 5) kein Kontakt zwischen dem Silikonring 6 und dem Mantelabschnitt der Innenoberfläche 5 des Kunststoffgehäuses 2 im Bereich des Mantels 21.

Weiter mit Bezug auf Fig. 4-6 ist ein ringförmiger Deckel 10 von außen auf den Membrantopf 3 und das Kunststoffgehäuse 2 aufgesetzt. Der ringförmige Deckel 10 ist ein Zweikomponentenmaterial mit einer harten Komponente 18 und einer weichen Komponente 19. Die harte Komponente 18 des Deckels 10 ist von außen mit der Wand 15 des Kunststoffgehäuses 2 laserverschweißt. Die weiche Komponente 19 des Deckels liegt an dem stirnseitigen Rand 11 des Kunststoffgehäuses 2 (des Mantels 21), an dem Silikonring 6 und an der Außenoberfläche 17 des Mantels 9 der Membranbaugruppe 3 an und bedeckt diese. Der Deckel dient zur Fixierung und Abdichtung der Verbindung zwischen Membrantopf 3 und Kunststoffgehäuse 2. Dabei liegt nur die weiche Komponente 19 des Deckels 10 an denjenigen Komponenten, nämlich dem Membrantopf 3 und dem Silikonring 6, an, denen gemäß der vorgeschlagenen Struktur Strukturschwingungen gestattet sind. Die weiche Komponente 19 des Deckels 10 kann ebenfalls Silikon sein. Demgemäß wird kaum Schwingungsenergie durch den Deckel 10 an das Kunststoffgehäuse 2 übertragen.

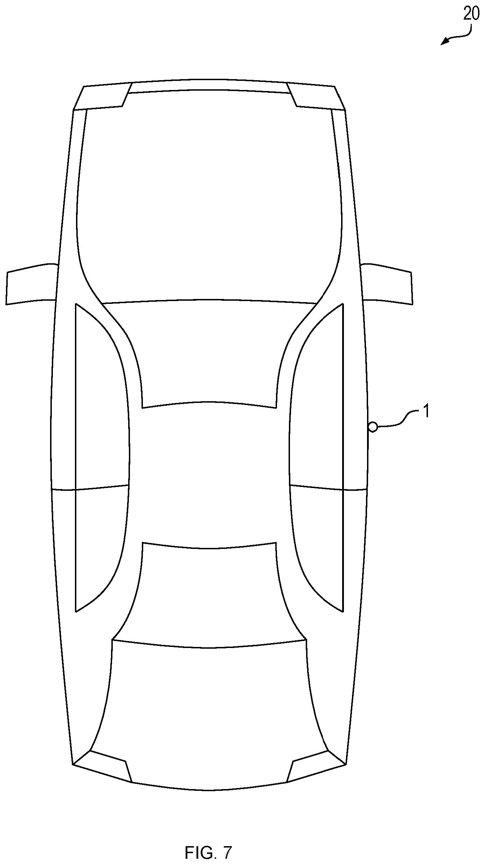

Fig. 7 zeigt eine schematische Draufsicht auf ein Kraftfahrzeug 20 gemäß einem dritten Ausführungsbeispiel. Das Kraftfahrzeug weist einen Ultraschallsensor 1 auf, bei dem es sich um einen Ultraschallsensor gemäß dem ersten oder dem zweiten Ausführungsbeispiel handeln kann. Der Ultraschallsensor 1 ist seitlich an dem Kraftfahrzeug 20 eingebaut und wird von einer (nicht gezeigten) Steuereinheit des Kraftfahrzeugs 20, die ein Parkassistenzsystem ausbildet, zur Vermessung eines seitlichen Umfelds des Kraftfahrzeugs genutzt.

Obwohl die vorliegende Erfindung anhand von Ausführungsbeispielen beschrieben wurde, ist sie vielfältig modifizierbar.

So ist in Fig. 3 eine anisotrope Struktur gezeigt, bei der die zweiten Rippen 72 nur in einem Bereich angeordnet sind, der im Wesentlichen in der zweiten radialen Richtung y verläuft. Der Mantel 9 des Membrantopfes 3 ist elliptisch, und demgemäß ist auch die Ultraschallmembran 8 elliptisch. Die in Fig. 3 gezeigte Struktur ist im Wesentlichen dazu eingerichtet, radiale Schwingungen des Membrantopfes 3 in der zweiten radialen Richtung y zu dämpfen und akustisch zu entkoppeln. Die in Fig. 3 gezeigte Struktur ist speziell auf die Abstrahlcharakteristik einer konkreten Ultraschallmembran 8 abgestimmt. Es ist jedoch selbstverständlich auch denkbar, die Rippen 72 an anderen Abschnitten oder auch entlang des gesamten Umfangs der Innenwand 5 des Kunststoffgehäuses 2 bereitzustellen, wenn andere oder auch beliebige radiale Schwingungen in der ersten und/oder der zweiten radialen Richtung oder in beliebigen Linearkombinationen davon entkoppelt werden sollen.

Die in Fig. 7 gezeigte Anordnung des Ultraschallsensors 1 am Kraftfahrzeug 20 ist rein beispielhaft. Es versteht sich, dass in praktischen Ausführungsbeispielen eine Vielzahl von vorschlagsgemäßen Ultraschallsensoren 1 rings um eine Außenhaut des Fahrzeugs 20 angeordnet werden können, um das gesamte Umfeld des Kraftfahrzeugs 20 zuverlässig überwachen zu können.

Anhand der Ausführungsbeispiele wurden Strukturen eines Ultraschallsensors 1 beschreiben, bei denen eine besondere gute akustische Entkopplung zwischen der Membranbaugruppe 3 und dem Kunststoffgehäuse 2 bereitgestellt wird durch einen reduzierte Anteil einer Innenoberfläche 5 des Kunststoffgehäuses 2, der mit einer der Membranbaugruppe 3 abgewandten Seite des Entkopplungselements 6 in Kontakt ist. Die akustische Entkopplung ist dadurch gegenüber Vergleichsbeispielen, bei denen keine Rippen in dem Kunststoffgehäuse oder nur Rippen an dem Entkopplungselement 6 ausgebildet sind, weiter nach außen, d. h. von dem Membrantopf 3 weg, verlagert. Die Montage der Membranbaugruppe 3 kann unter Erhalt des reduzierten Traganteils auch unter Vorspannung erfolgen. Es ergibt sich eine klar definierte Separation des technischen Effekts der akustischen Entkopplung (an der Außenfläche des Entkopplungselements 6) einerseits und des technischen Effekts der akustischen Dämpfung (im Innern des Entkopplungselements 6) andererseits. Die vorgeschlagenen Ultraschallsensoren 1 können demgemäß eine verbesserte Strukturdynamik aufweisen.

### BEZUGSZEICHENLISTE

- 1: Ultraschallsensor
- 2: Kunststoffgehäuse
- 3: Membranbaugruppe, Membrantopf
- 4: Gehäuseöffnung
- 5: Innenoberfläche der Gehäuseöffnung
- 6: Entkopplungselement, Silikonring
- 7: Rippen
- 8: Boden, Ultraschallmembran
- 9: Mantel
- 10: ringförmiger Deckel
- 11: stirnseitiger Rand des Kunststoffgehäuses
- 12: Konsole, Bodenabschnitt der Gehäuseöffnung
- 13: Gehäuseinnenraum
- 14: weiterer Bodenabschnitt der Gehäuseöffnung
- 15: Stirnseite des Mantels des Membrantopfes
- 16: Hohlraum
- 17: Außenoberfläche des Mantels des Membrantopfes
- 18: harte Komponente
- 19: weiche Komponente
- 20: Kraftfahrzeug
- 21: Mantel der Gehäuseöffnung
- 71: erste Rippen
- 72: zweite Rippen

## Patentansprüche

1. Ultraschallsensor (1) für ein Kraftfahrzeug (20), wobei der Ultraschallsensor (1) aufweist: ein Kunststoffgehäuse (2), eine in einer Gehäuseöffnung (4) des Kunststoffgehäuses (4) angeordnete Membranbaugruppe (3), die eine Ultraschallmembran (8) umfasst, und ein zwischen einer Innenoberfläche (5) des Kunststoffgehäuses (2) und der Membranbaugruppe (3) angeordnetes Entkopplungselement (6),
wobei an der Innenoberfläche (5) des Kunststoffgehäuses (2) mehrere Rippen (7, 71, 72) ausgebildet sind, an welchen das Entkopplungselement (6) anliegt, und die Rippen (7, 71, 72) dergestalt ausgebildet sind, dass das Entkopplungselement (6) nicht vollflächig an der Innenoberfläche (5) des Kunststoffgehäuses (2) anliegt
wobei die Membranbaugruppe einen Membrantopf (3) mit einem Boden (8), welcher die Ultraschallmembran (8) ausbildet, und einem einstückig mit dem Boden (8) ausgebildeten Mantel (9) umfasst, wobei der Membrantopf (3) entlang einer axialen Richtung der Gehäuseöffnung in die Gehäuseöffnung (4) eingeführt ist,
**dadurch gekennzeichnet, dass**
mindestens einige der Rippen (72) an einem Mantelabschnitt der Innenoberfläche (5) des Kunststoffgehäuses (2) radial nach innen vorstehen und in der axialen Richtung der Gehäuseöffnung (4) verlaufen.

2. Ultraschallsensor nach Anspruch 1,
wobei das Entkopplungselement (6) vollflächig an der Membranbaugruppe (3) anliegt.

3. Ultraschallsensor nach einem der vorhergehenden Ansprüche,
wobei die Membranbaugruppe (3) unter Vorspannung in der Gehäuseöffnung (4) montiert ist.

4. Ultraschallsensor nach einem der Ansprüche 1 bis 3,
wobei mindestens ein Abschnitt des Entkopplungselements (6) in einem gesamten ersten Überlappungsbereich angeordnet ist, in dem eine Außenoberfläche (17) des Mantels (9) des Membrantopfes (3) und der Mantelabschnitt der Innenoberfläche (5) des Kunststoffgehäuses (2) einander überlappen, flächig an dem Mantel (9) des Membrantopfes (3) anliegt und den Mantel (9) des Membrantopfes (3) ringförmig umschließt,
wobei die in der axialen Richtung verlaufenden Rippen (72) in dem Mantelabschnitt der Innenoberfläche (5) des Kunststoffgehäuses (2) in dem ersten Überlappungsbereich ausgebildet sind.

5. Ultraschallsensor nach Anspruch 4,
wobei die in der axialen Richtung verlaufenden Rippen (72) eine Einführschräge zum Einführen des Membrantopfes (3) und des Entkopplungselements (6) ausbilden.

6. Ultraschallsensor nach einem der Ansprüche 1 bis 5,
wobei mindestens einige der Rippen (71) an einem Bodenabschnitt (12) der Gehäuseöffnung (4) in der axialen Richtung der Gehäuseöffnung (4) vorstehen und ringförmig in einer Umfangsrichtung der Gehäuseöffnung (4) verlaufen.

7. Ultraschallsensor nach Anspruch 6,
wobei der Bodenabschnitt der Gehäuseöffnung (4) durch eine einstückig mit dem Kunststoffgehäuse (2) ausgebildete, in der axialen Richtung innenliegende und radial nach innen auskragende, ringförmige Konsole (12) ausgebildet ist.

8. Ultraschallsensor nach 6 oder 7,
wobei mindestens ein Abschnitt des Entkopplungselements (6) in einem gesamten zweiten Überlappungsbereich angeordnet ist, in dem eine Stirnseite (15) des Mantels (9) des Membrantopfs (3) und der Bodenabschnitt (12) der Gehäuseöffnung (4) einander überlappen, und an der Stirnseite (11) des Mantels (9) des Membrantopfs (3) flächig anliegt,
wobei die ringförmig in der radialen Richtung verlaufenden Rippen (71) an dem Bodenabschnitt (12) der Gehäuseöffnung (4) in dem zweiten Überlappungsbereich ausgebildet sind.

9. Ultraschallsensor nach einem der Ansprüche 1 bis 8,
wobei ein ringförmiger Deckel (10) von außen auf den Membrantopf (3) und das Kunststoffgehäuse (2) aufgesetzt ist, freiliegende Abschnitte des Entkopplungselements (6) bedeckt und von außen mit dem Kunststoffgehäuse (2) verbunden ist,
wobei der ringförmige Deckel (10) ein Zweikomponentenmaterial mit einer harten Materialkomponente (18) und einer weichen Materialkomponente (19) ist und die weiche Materialkomponente (19) an der Außenoberfläche (17) des Mantels (9) des Membrantopfs (3), an den freiliegenden Abschnitten des Entkopplungselements (6) und an einem stirnseitigen Rand (11) des Kunststoffgehäuses (2) anliegt.

10. Kraftfahrzeug (20) mit mindestens einem Ultraschallsensor (1) nach einem der Ansprüche 1 bis 9.

## Claims

1. Ultrasonic sensor (1) for a motor vehicle (20), wherein the ultrasonic sensor (1) has: a plastics housing (2), a diaphragm assembly (3), which is arranged in a housing opening (4) of the plastics housing (4) and comprises an ultrasonic diaphragm (8), and a decoupling element (6), which is arranged between an inner surface (5) of the plastics housing (2) and the diaphragm assembly (3),
wherein a plurality of ribs (7, 71, 72) against which the decoupling element (6) rests are formed on the inner surface (5) of the plastics housing (2), and the ribs (7, 71, 72) are formed such that the decoupling element (6) does not rest over all of its surface area against the inner surface (5) of the plastics housing (2),
wherein the diaphragm assembly comprises a diaphragm pot (3) with a base (8) forming the ultrasonic diaphragm (8), and a jacket (9) formed in one piece with the base (8), wherein the diaphragm pot (3) is inserted in the housing opening (4) along an axial direction of the housing opening,
**characterized in that**
at least some of the ribs (72) on a jacket section of the inner surface (5) of the plastics housing (2) project radially inwards and extend in the axial direction of the housing opening (4).

2. Ultrasonic sensor according to Claim 1,
wherein the decoupling element (6) rests over all of its surface area against the diaphragm assembly (3).

3. Ultrasonic sensor according to either of the preceding claims,
wherein the diaphragm assembly (3) is mounted under preloading in the housing opening (4).

4. Ultrasonic sensor according to one of Claims 1 to 3,
wherein at least one section of the decoupling element (6) is arranged in an entire first overlap region, in which an outer surface (17) of the jacket (9) of the diaphragm pot (3) and the jacket section of the inner surface (5) of the plastics housing (2) overlap, lies flat against the jacket (9) of the diaphragm pot (3), and annularly encloses the jacket (9) of the diaphragm pot (3),
wherein the ribs (72) extending in the axial direction are formed in the jacket section of the inner surface (5) of the plastics housing (2) in the first overlap region.

5. Ultrasonic sensor according to Claim 4,
wherein the ribs (72) extending in the axial direction form an insertion bevel for inserting the diaphragm pot (3) and the decoupling element (6).

6. Ultrasonic sensor according to one of Claims 1 to 5,
wherein at least some of the ribs (71) on a base portion (12) of the housing opening (4) project in the axial direction of the housing opening (4) and extend annularly in a circumferential direction of the housing opening (4) .

7. Ultrasonic sensor according to Claim 6,
wherein the base portion of the housing opening (4) is formed by an annular bracket (12) which is formed in one piece with the plastics housing (2), lies on the inside in the axial direction, and projects radially inwards.

8. Ultrasonic sensor according to Claim 6 or 7,
wherein at least one section of the decoupling element (6) is arranged in an entire second overlap region, in which an end face (15) of the jacket (9) of the diaphragm pot (3) and the base section (12) of the housing opening (4) overlap, and lies flat against the end face (11) of the jacket (9) of the diaphragm pot (3),
wherein the ribs (71) extending annularly in the radial direction are formed on the base section (12) of the housing opening (4) in the second overlap region.

9. Ultrasonic sensor according to one of Claims 1 to 8,
wherein an annular lid (10) is placed on the diaphragm pot (3) and the plastics housing (2) from the outside, covers exposed sections of the decoupling element (6), and is connected to the plastics housing (2) from the outside,
wherein the annular lid (10) is a two-component material with a hard material component (18) and a soft material component (19), and the soft material component (19) rests against the outer surface (17) of the jacket (9) of the diaphragm pot (3), against the exposed sections of the decoupling element (6), and against an end-face edge (11) of the plastics housing (2).

10. Motor vehicle (20) with at least one ultrasonic sensor (1) according to one of Claims 1 to 9.

## Revendications

1. Capteur à ultrasons (1) pour un véhicule automobile (20), le capteur à ultrasons (1) présentant : un boîtier en matière plastique (2), un ensemble de membrane (3) agencé dans une ouverture de boîtier (4) du boîtier en matière plastique (4), lequel comprend une membrane à ultrasons (8), et un élément de découplage (6) agencé entre une surface intérieure (5) du boîtier en matière plastique (2) et l'ensemble de membrane (3),
plusieurs nervures (7, 71, 72) étant réalisées sur la surface intérieure (5) du boîtier en matière plastique (2), contre lesquelles s'appuie l'élément de découplage (6), et les nervures (7, 71, 72) étant réalisées de telle sorte que l'élément de découplage (6) ne s'appuie pas sur toute la surface de la surface intérieure (5) du boîtier en matière plastique (2),
l'ensemble de membrane comprenant un pot à membrane (3) avec un fond (8) qui réalise la membrane à ultrasons (8) et une enveloppe (9) réalisée d'un seul tenant avec le fond (8), le pot à membrane (3) étant inséré dans l'ouverture de boîtier (4) le long d'une direction axiale de l'ouverture de boîtier,
**caractérisé en ce que**
au moins certaines des nervures (72) dépasse radialement vers l'intérieur sur une section d'enveloppe de la surface intérieure (5) du boîtier en matière plastique (2) et s'étendent dans la direction axiale de l'ouverture de boîtier (4) .

2. Capteur à ultrasons selon la revendication 1,
l'élément de découplage (6) s'appuyant sur toute la surface de l'ensemble de membrane (3).

3. Capteur à ultrasons selon l'une quelconque des revendications précédentes,
l'ensemble de membrane (3) étant monté sous précontrainte dans l'ouverture de boîtier (4).

4. Capteur à ultrasons selon l'une quelconque des revendications 1 à 3,
au moins une section de l'élément de découplage (6) étant agencée dans toute une première zone de chevauchement, dans laquelle une surface extérieure (17) de l'enveloppe (9) du pot à membrane (3) et la section d'enveloppe de la surface intérieure (5) du boîtier en matière plastique (2) se chevauchent, s'appuyant à plat contre l'enveloppe (9) du pot à membrane (3) et entourant l'enveloppe (9) du pot à membrane (3) de manière annulaire,
les nervures (72) s'étendant dans la direction axiale étant réalisées dans la section d'enveloppe de la surface intérieure (5) du boîtier en matière plastique (2) dans la première zone de chevauchement.

5. Capteur à ultrasons selon la revendication 4,
les nervures (72) s'étendant dans la direction axiale réalisant une pente d'insertion pour insérer le pot à membrane (3) et l'élément de découplage (6).

6. Capteur à ultrasons selon l'une quelconque des revendications 1 à 5,
au moins certaines des nervures (71) dépassant au niveau d'une section de fond (12) de l'ouverture de boîtier (4) dans la direction axiale de l'ouverture de boîtier (4) et s'étendant de manière annulaire dans une direction circonférentielle de l'ouverture de boîtier (4).

7. Capteur à ultrasons selon la revendication 6,
la section de fond de l'ouverture de boîtier (4) étant réalisée par une console annulaire (12) réalisée d'un seul tenant avec le boîtier en matière plastique (2), située à l'intérieur dans la direction axiale et faisant saillie radialement vers l'intérieur.

8. Capteur à ultrasons selon la revendication 6 ou 7,
au moins une section de l'élément de découplage (6) étant agencée dans toute une deuxième zone de chevauchement, dans laquelle un côté frontal (15) de l'enveloppe (9) du pot à membrane (3) et la section de fond (12) de l'ouverture de boîtier (4) se chevauchent, et s'appuyant à plat contre le côté frontal (11) de l'enveloppe (9) du pot à membrane (3),
les nervures (71) s'étendant de manière annulaire dans la direction radiale étant réalisées sur la section de fond (12) de l'ouverture de boîtier (4) dans la deuxième zone de chevauchement.

9. Capteur à ultrasons selon l'une quelconque des revendications 1 à 8,
un couvercle annulaire (10) étant placé de l'extérieur sur le pot à membrane (3) et le boîtier en matière plastique (2), recouvrant des sections exposées de l'élément de découplage (6) et étant relié de l'extérieur au boîtier en matière plastique (2),
le couvercle annulaire (10) étant un matériau à deux composants avec un composant de matériau dur (18) et un composant de matériau mou (19), et le composant de matériau mou (19) s'appuyant contre la surface extérieure (17) de l'enveloppe (9) du pot à membrane (3), contre les sections exposées de l'élément de découplage (6) et contre un bord frontal (11) du boîtier en matière plastique (2) .

10. Véhicule automobile (20) avec au moins un capteur à ultrasons (1) selon l'une quelconque des revendications 1 à 9.
